# EUROPÄISCHE PATENTSCHRIFT

(11) **EP 3 315 266 B1**
(45) Veröffentlichungstag und Bekanntmachung des Hinweises auf die Patenterteilung: **07.08.2019**
(21) Anmeldenummer: 17193802.0
(22) Anmeldetag: 28.09.2017
(51) Int. Cl.: B25H 1/00, B66D 1/08

(54) **GEWICHTSAUSGLEICHER**
BALANCER
COMPENSATEUR DE POIDS

(30) Priorität: 27.10.2016 DE 102016120564
(43) Veröffentlichungstag der Anmeldung: 02.05.2018
(73) Patentinhaber: Carl Stahl Kromer GmbH, 79288 Gottenheim (DE)
(72) Erfinder: Steinle, Thomas, 79258 Hartheim (DE)
(74) Vertreter: Rummler, Felix

(56) Entgegenhaltungen:
- US-A- 2 801 814
- US-A- 3 428 298
- US-A1- 2008 135 819

## Beschreibung

Die Erfindung betrifft einen Gewichtsausgleicher, insbesondere einen Federzug oder einen Balancer, für ein bewegliches Bauteil mit einem auszugleichenden Bauteilgewicht.

### Hintergrund der Erfindung

Gewichtsausgleicher wie Federzüge oder Balancer werden dazu verwendet, das Eigengewicht eines handzuhabenden Bauteils in dem Sinne auszugleichen, dass die Person, die das Bauteil verwendet, dessen Gewicht nicht tragen muss. Relevant ist dies beispielsweise in Fertigungsstätten, in denen für bestimmte Fertigungsschritt schwere Werkzeuge verwendet werden müssen. Damit die Fertiger nicht während der Verwendung des entsprechenden Werkzeuges dauerhaft dessen Gewicht tragen müssen, sondern sich auf die feinmotorische Anwendung des Werkzeugs konzentrieren können, werden die genannten Gewichtsausgleicher eingesetzt.

Dazu kann der Gewichtsausgleicher beispielsweise an einem Querbalken in der Dachkonstruktion eingehängt werden, und das auszugleichende Bauteil seinerseits am Gewichtsausgleicher eingehängt werden.

Bekannte Gewichtsausgleicher verfügen über eine Spiralfeder, die nach dem Einhängen des Bauteils so lange ausgelenkt wird, bis die Biegeauslenkung der Spiralfeder eine so starke Federkraft nach sich zieht, dass die Gewichtskraft des eingehängten Bauteils kompensiert wird.

Normalerweise wird bei diesen bekannten Gewichtsausgleichern das Bauteil mit einem Karabinerhaken an einem Seil befestigt, das mit seinem anderen Ende wiederum an dem äußeren Ende der Spiralfeder befestigt ist. Das innere Ende der Spiralfeder ist drehfest an einem Träger des bekannten Gewichtsausgleichers angeordnet, wobei der Träger seinerseits mittels eines Seils und/oder eines Karabinerhakens an einem Dachbalken befestigt werden kann. Das sich so bei eingehängtem Bauteil einstellende Gleichgewicht ermöglicht einer Bedienperson, das Bauteil handzuhabenden, ohne ständig dessen Gewichtskraft als Haltekraft aufbringen zu müssen.
Die Verwendung von Spiralfedern für die Gewichtskompensation ermöglicht einen einfachen Aufbau. Allerdings sind aufgrund der Natur von Spiralfedern die maximal ausgleichbaren Traglasten - bezogen auf die Baugröße des Gewichtsausgleichers - verhältnismäßig gering. Zudem ist der Zuwachs der Federkraft bei einer bestimmten Auslenkung von der bereits erfolgten Biegung der Spiralfeder abhängig. Dies macht beispielsweise die Einstellung einer gewünschten Vorspannung zur Anpassung an ein zu erwartendes Bauteilgewicht schwierig. Aus US 3,428,298 ist beispielsweise bekannt, anstatt einer mechanischen Feder ein Gasvolumen als Feder zu verwenden, wobei der Gasdruck in dem Volumen über eine Steuereinrichtung verstellbar ist, und so den auszugleichenden Lasten angepasst werden kann.

Die Erfindung macht es sich zur Aufgabe, einen in einem größeren Gewichtsbereich einsetzbaren und vorzugsweise leichter einstellbaren mechanischen Gewichtsausgleicher bereitzustellen.

### Kurzbeschreibung der Erfindung

Diese Aufgabe wird durch die im unabhängigen Anspruch angegebene Erfindung gelöst. Vorteilhafte Weiterbildungen sind den Unteransprüchen zu entnehmen.

Erfindungsgemäß geschaffen ist ein Gewichtsausgleicher, insbesondere ein Federzug oder ein Balancer, für ein bewegliches Bauteil mit einem Bauteilgewicht, aufweisend ein Spindelgetriebe mit einem Translationselelement und einem Rotationselement, an dem das Bauteil eingehängt werden kann, und wenigstens eine Druckfeder, die an einem ihrer Enden - wenigstens mittelbar - mit dem Translationselement des Spindelgetriebes verbunden ist. Die Druckfeder ist bei einer durch das Bauteilgewicht verursachten Drehung des Rotationselements mittels des Translationselements stauchbar.

Die Erfindung basiert unter anderem auf der Idee, dass Druckfedern, die entlang ihrer Längsachse auf Druck belastet werden, einen zur Auslenkung entlang der Längsachse proportionalen Anstieg der Federkraft aufweisen, sprich einen linearen Federkraftverlauf. Dies unterscheidet Druckfedern von den bisher in Gewichtsausgleichern verwendeten Spiralfedern, die bei der Auslenkung nicht druckbelastet, sondern um ihre Längsachse biegebelastet sind. Daher weisen Spiralfedern keinen linearen Kraftverlauf auf, der aber vorteilhaft für die Auslegung des Gewichtsausgleichers, insbesondere für dessen Anpassung an ein bestimmtes Gewicht des auszugleichenden Bauteils ist.

Zudem können Druckfedern zur Verwendung in Gewichtsausgleichern so ausgelegt werden, dass mit ihnen auch sehr große Gewichtskräfte und/oder ein großer Gewichtskraftbereich abgefedert werden können. Auch das ist mit Spiralfedern schwierig, weil sich diese um ihre zentrale Achse bei der Auslenkung schnell zusammenziehen, sodass ab einer gewissen Auslenkung die einzelnen Lagen aneinander anliegen und keine weitere Auslenkung möglich ist.

Die Erfindung basiert zudem auf der Erkenntnis, dass die Verwendung von Druckfedern in Gewichtsausgleichern aufgrund von deren typischen Anwendungsfällen ein Getriebe erfordert: Gewichtsausgleicher sind typischerweise über dem angestrebten Arbeitsraum aufgehängt und gleichen eine Gewichtskraft aus, die notwendigerweise nach unten wirkt. Daher muss bei der Verwendung von Druckfedern zum Aufbringen einer, der Gewichtskraft entgegenwirkenden, Federkraft eine Zugkraft in eine Druckkraft umgesetzt werden. Im Sinne der Erfindung geschieht dies mittels des Spindelgetriebes, das Rotationsbewegungen (am Rotationselement) in Längsbewegungen (am Translationselement) umsetzen kann. Zwischen dem Rotationselement und dem Translationselement ist vorzugsweise ein Gewinde, insbesondere mit einer vorbestimmten Gewindesteigung, angeordnet, das diese Umsetzung vermittelt.

Eine Druckfeder im Sinne der Erfindung ist eine zylindrische Schraubenfeder, die entlang ihrer Längsachse bei Druckbelastung einfedern kann.

Der Begriff Gewichtsausgleicher wird hier als Sammelbegriff unter anderem für Federzüge und Balancer verwendet, und orientiert sich an der Funktion dieser Geräte: einer Kompensation der Gewichtskraft des auszugleichenden Bauteils. Als Federzüge (auch Rückholer genannt) werden häufig Gewichtsausgleicher für eher geringere Lasten bezeichnet, bei denen zudem oft die Funktion eines Herziehens und Zurückziehens der eingehängten Last wichtig ist. Als Balancer werden häufig Gewichtsausgleicher für eher höhere Lasten bezeichnet, bei denen funktional oft die Gewichtskompensation im Vordergrund steht. Daher werden Balancer auch - in einem engeren Sinne als hier verwendet - Gewichtsausgleicher genannt.

Weil klassische Trapezgewinde häufig zur Selbsthemmung neigen, die allenfalls durch eine extrem genaue Tolerierung und/oder eine aufwändige Schmierung reduziert werden kann, weist in einer Ausgestaltung der Erfindung die Spindel ein Bewegungsgewinde, insbesondere ein Kugel- oder ein Rollengewinde, auf. Solche Bewegungsgewinde können beispielsweise spielfrei ausgelegt werden und haben insbesondere dadurch eine geringere Neigung zur Selbsthemmung. Generell weisen Bewegungsgewinde eine niedrigere Reibung zwischen den Lagerungspartnern auf als klassische Gewinde und eignen sich deshalb für die vorliegende Anwendung gut.

Ob bei dem verwendeten Spindelgetriebe die Spindel als Rotationselement ausgeführt ist und die Spindelmutter als Translationselement, oder andersherum, ist für das Funktionsprinzip der Erfindung an sich irrelevant. Trotzdem sind in unterschiedlichen Ausgestaltungen der Erfindung diese beiden Alternativen vorgesehen, weil in Abhängigkeit von der sonstigen Ausgestaltung des Gewichtsausgleicher die eine oder die andere Alternative beispielsweise Vorteile hinsichtlich des Kraftflusses, einer einfachen Fertigung und/oder einer gegebenenfalls vorgesehenen Einstelleinrichtung zum Einstellen einer Vorspannung der Druckfedern haben kann.

Um eine einfache Kraftübertragung zwischen der Druckfeder und dem Spindelgetriebe zu ermöglichen, sind in einer Ausgestaltung der Erfindung die Druckfeder und das Translationselement mittels eines Anlageelements verbunden, das an dem einen Ende der Druckfeder anliegt und fest mit dem Translationselement verbunden ist. Bei einer Ausführung mit mehreren Druckfedern kann das Anlageelement beispielsweise als massive, an dem Translationselement angeschweißte Scheibe ausgebildet sein, die die im Umfang des Translationselements angeordneten Druckfedern an ihrem jeweiligen, dem Anlageelement zugewandten Ende eindrücken kann.

Damit mittels des Spindelgetriebes in effektiver Weise eine Druckkraft auf die Druckfeder ausgeübt werden kann, verläuft nach einer Ausgestaltung der Erfindung eine Längsbewegungsachse des Translationselements parallel zu der Längsachse der Druckfeder.

Um ein Verdrehen der Druckfeder(n) im Betrieb zu vermeiden, weist in einer Ausgestaltung der Erfindung der Gewichtsausgleicher einen Federträger auf, an welchem die Druckfeder an dem anderen ihrer Enden drehfest angeordnet ist, an welchem das Rotationselement drehbar gelagert ist und/oder an welchem der Gewichtsausgleicher aufhängbar ist, insbesondere an einem Seil und/oder einem Karabinerhaken.

In einer Ausgestaltung der Erfindung ist die Druckfeder koaxial mit dem Spindelgetriebe und radial außerhalb des Umfangs der Spindel angeordnet, insbesondere - abgesehen von dem Anlageelement - auch radial außerhalb des Umfangs der Spindelmutter. Durch die Verwendung, beispielsweise einer einzigen, Druckfeder, die um das Spindelgetriebe herum angeordnet ist, kann ein sehr klein bauender Gewichtsausgleicher erreicht werden.

Im Sinne der Erfindung kann der Gewichtsausgleicher auch mehr als eine, insbesondere 2, 3, 4, 6 oder 8 Druckfedern aufweisen, die vorzugsweise parallel zueinander und/oder gleichmäßig beabstandet im Umfang des Spindelgetriebes angeordnet sind. Dies kann beispielsweise eine gleichmäßiger verteilte Krafteinleitung in den Federträger oder eine Verwendung günstigerer Standardbauformen von Druckfedern ermöglichen, indem die aufzubringende Druckkraft auf mehrere Druckfedern verteilt wird.

Als Verdrehsicherung ist, beispielsweise beim Gebrauch mehrerer Druckfedern, vorzugsweise vorgesehen, jede der Druckfedern um einen Bolzen herum anzuordnen, der fest mit dem Federträger verbunden ist.

Dabei ist in bevorzugter Ausgestaltung das Translationselement direkt oder mittelbar mittels des Anlageelements drehfest, aber frei hinsichtlich der Stauchrichtung, mit wenigstens einem der Bolzen verbunden, um eine effektive Kraftübertragung in der Stauchrichtung sicherzustellen.

In einer Ausgestaltung der Erfindung ist das Rotationselement drehfest mit einer, insbesondere zylindrischen oder konischen, Seiltrommel verbunden, an deren Umfang eine, insbesondere spiralförmige, Seilaufnahme angeordnet ist, an der im Betrieb des Gewichtsausgleichers ein Seil befestigt und mehrfach herumführbar ist. Vorzugsweise an dem nicht befestigten Ende des Seils ist das gewichtsmäßig auszugleichende Bauteil einhängbar, beispielsweise an einem Karabinerhaken. Dadurch kann das Spindelgetriebe derart mit dem Bauteil verbunden werden, dass durch die anliegende Schwerkraft eine Rotationsbewegung entsteht.

In einer Ausgestaltung der Erfindung ist das Rotationselement, insbesondere mittels einer Einstelleinrichtung, vorübergehend von der Seiltrommel entkoppelbar (insbesondere bezüglich Drehung) und im Verhältnis zum Translationselement drehbar. So kann eine von der Stellung der Seilrolle unabhängige Stauchung oder Dehnung der Druckfeder erfolgen, wodurch eine einfache Voreinstellung der aufzubringenden Gegenkraft möglich wird.

### Kurzbeschreibung der Zeichnungen

Nachfolgend sind anhand der beigefügten Zeichnungen beispielhafte Ausführungsformen der Erfindung näher beschrieben. Es zeigen:
- Fig. 1: eine Frontalansicht eines beispielhaften Gewichtsausgleichers gemäß der Erfindung;
- Fig. 2: eine Seitenansicht des Gewichtsausgleichers aus Fig. 1;
- Fig. 3: eine Schnittansicht entlang dem in Fig. 1 eingezeichneten Schnitt A - A; und
- Fig. 4: eine Rückansicht des Gewichtsausgleichers aus Fig. 1;

### Figurenbeschreibung

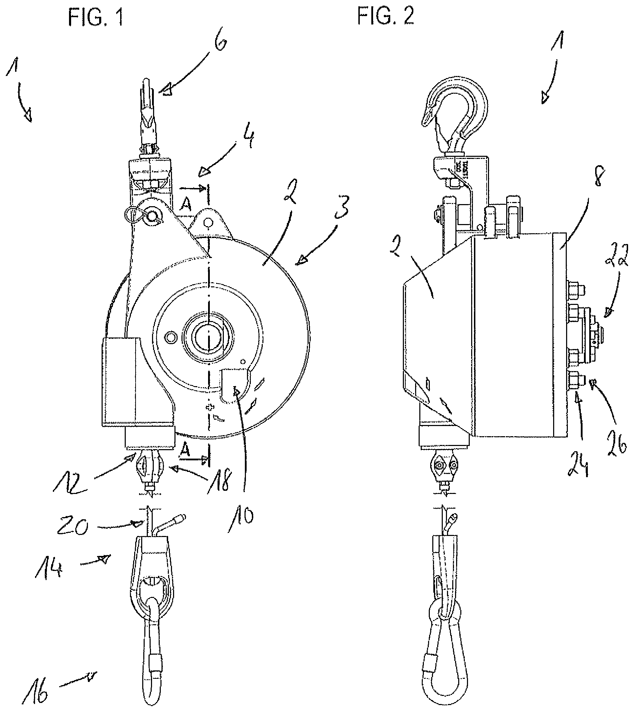

Figur 1 zeigt einen als Federzug ausgebildeten Gewichtsausgleicher 1 in einer Frontalansicht. In Fig. 2 ist der gleiche Gewichtsausgleicher 1 in einer Seitenansicht dargestellt.

Aus den beiden Figuren sind die äußeren Komponenten des Gewichtsausgleichers 1 erkenntlich. An einer topfartig ausgebildeten Gehäusekomponente 2 eines Gehäuses 3 ist eine Aufhänge-Einrichtung 4 mit einem Karabinerhaken 6 angeordnet, mit welchem der Gewichtsausgleicher 1 beispielsweise an einem Deckenbalken oder an einem Rahmengestell aufgehängt werden kann.

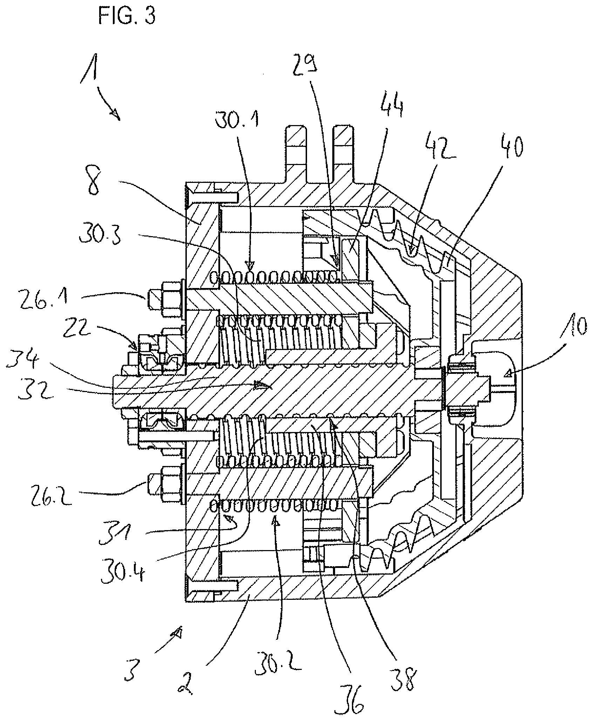

Das Gehäuse 3 weist zudem einen als Gehäusedeckel ausgebildeten Federträger 8 auf, der im Ausführungsbeispiel (vergleiche Fig. 3) mit der Gehäusekomponente 2 verschraubt ist. An der Gehäusekomponente 2 ist ferner eine Einstellungsvorrichtung 10 zur Einstellung einer Vorspannung der Druckfedern angeordnet.

Die Druckfedern sowie das Spindelgetriebe sind im Inneren des Gehäuses 3 angeordnet und daher in den Figuren 1 und 2 nicht sichtbar.

Aus einer nicht direkt sichtbaren Ausnehmung 12 im Gehäuse 3 erstreckt sich ein Seilauszug 14 mit einem Karabinerhaken 16 zum Einhängen des Bauteils mit dem auszugleichenden Gewicht (nicht dargestellt), beispielsweise eines Fertigungswerkzeugs.

Der Seilauszug 14 weist zudem eine Seilsperre 18 auf, die ein Einziehen des Seils 20 des Seilauszugs 14 in das Gehäuseinnere begrenzt. Die Seilsperre ist im Ausführungsbeispiel sinnvoll, weil die Druckfedern vorgespannt sind (also bereits im Ruhezustand gestaucht), und damit das Seil einziehen, wenn kein Bauteil mit einem gewissen Bauteilgewicht daran befestigt ist.

Aus Fig. 2 ist zudem ersichtlich, dass an dem als Gehäusedeckel ausgebildeten Federträger 8 eine Spindellagerung 22 sowie Befestigungsmuttern 24 für Bolzen 26 angeordnet sind, die einer Verdrehsicherung der Druckfedern 30 dienen.

Fig. 3 zeigt eine Schnittansicht entlang dem in Fig. 1 eingezeichneten Schnitt A - A, und damit das Innere des Gehäuses 3.

In der beispielhaften Ausführung sind sechs Druckfedern 30 jeweils um einen Bolzen 26 angeordnet, wobei die Bolzen fest mit dem Federträger 8 verbunden sind. Die Gehäusekomponente 2 ist wiederum fest mit dem Federträger 8 verbunden. Jede der Druckfedern 30 liegt mit ihrem einen Ende 29 an dem Aufnahmeelement 44 an, mit ihrem anderen Ende 31 an der Innenseite des Federträgers 8.

In dem Ausführungsbeispiel ist ein Spindelgetriebe 32 im Inneren des Gehäuses 3 angeordnet, das eine Spindel 34 und eine Spindelmutter 36 aufweist. Zwischen der Spindel 34 und der Spindelmutter 36 ist ein als Kugelgewinde ausgebildetes Bewegungsgewinde 38 mit einer konstanten Gewindesteigung angeordnet (nur stark vereinfacht schematisch dargestellt).

Die Spindel 34 ist in dem Spindellager 22 im Verhältnis zu dem Federträger 8 und damit den Druckfedern 30 drehbar gelagert und - zumindest im Betriebszustand - mit einer Seiltrommel 40 drehfest verbunden. Die Seiltrommel 40 weist im Ausführungsbeispiel einen konischen Umfang sowie eine spiralförmige Seilaufnahme 42 auf; allerdings sind auch andere beispielhafte Ausführungen mit einer Seiltrommel mit zylindrischem Umfang vorgesehen.

An der Spindelmutter 36 ist drehfest und entlang des gesamten Umfangs ein als Kreislochplatte ausgebildetes Anlageelement 44 angeordnet, dass für jeden Bolzen 26 ein Durchgangsloch aufweist und an dem die Druckfedern 30 mit ihrem Ende 29 unter einer Druck-Vorspannung anliegen. Das Anlageelements 44 ist im Ausführungsbeispiel mit der Spindelmutter 36 verschweißt, kann aber auch auf andere geeignete Art mit dieser fest verbunden.

Beim Betrieb des Gewichtsausgleichers 1 kann also die Seiltrommel 40 gemeinsam mit der Spindel 34 relativ zu den Gehäuse-drehfesten Druckfedern 30 verdreht werden. Dies geschieht bei typischen Anwendungen des Gewichtsausgleichers 1 beispielsweise, wenn in den Haken 16 ein Fertigungswerkzeug oder ein anderes Bauteil mit einem relevanten Bauteilgewicht eingehängt wird. Dann wird über den Seilauszug 14, dessen Seil 20 in der Seilaufnahme 42 geführt und an dieser befestigt ist, die Seiltrommel 40 aufgrund der anliegenden Schwerkraft des Bauteils gedreht. Die Steigungsrichtung des Bewegungsgewindes 38 ist so gewählt, dass bei einem Ausziehen des Seilauszugs 14 die Spindelmutter 36 - in der Zeichenebene - nach links verfahren wird, also gleichermaßen auf den Federträger 8 zu. Die Druckfedern 30 werden gestaucht, indem die Translationsbewegung der Gewindemutter 36 über das Anlageelements 44 auf die Federn übertragen wird.

Mit einer weiteren Auslenkung der Seiltrommel 40 dreht sich die Spindel 34 immer weiter; die Gehäuse-drehfest angeordnete Gewindemutter 36 wird dabei durch die Wirkung des Bewegungsgewindes 38 proportional immer weiter nach links ausgelenkt. Die durch die Druckfedern 30 auf das Anlageelement 44 aufgebrachte Druck-Federkraft steigt nach den Federkraftgesetzen linear mit der Stauchung immer weiter an. Dieser Prozess kommt erst zum Halten, wenn die der Gewichtskraft des Bauteils entgegenwirkende Federkraft der Druckfedern soweit zugenommen hat, dass sie der Gewichtskraft die Waage hält. In diesem Zustand kann der Gewichtsausgleicher seine eingangs genannten Funktionen erfüllen.

Auf der dem Federträger 8 fernen Seite des Gehäuses 3 kann eine Einstelleinrichtung 10 vorgesehen sein, mittels der in geeigneter Weise die drehfeste Verbindung zwischen der Seiltrommel 40 und der Spindel 34 vorübergehend aufgehoben werden kann, und in diesem Vorspann-Zustand die Spindel 34 ohne ein Verdrehen der Seiltrommel 40 gedreht werden kann, was eine Verschiebung der von der Seilsperre 12 vorgegebenen Ruheposition der Spindelmutter 36 zur Folge hat, und damit eine veränderte Vorspannung des Gewichtsausgleichers 1. die dazu benötigte Dreh-Entkopplung der Spindel 34 und der Seiltrommel 40 kann beispielsweise über eine ein- und auskoppelbare Keilverzahnung zwischen den beiden Komponenten erfolgen. Der Koppelmechanismus ist dann Teil der Einstelleinrichtung 10.

Alternativ kann eine Veränderung der Vorspannung auch durch eine Veränderung der Position der Seilsperre 12 entlang des Seils 20 erfolgen.

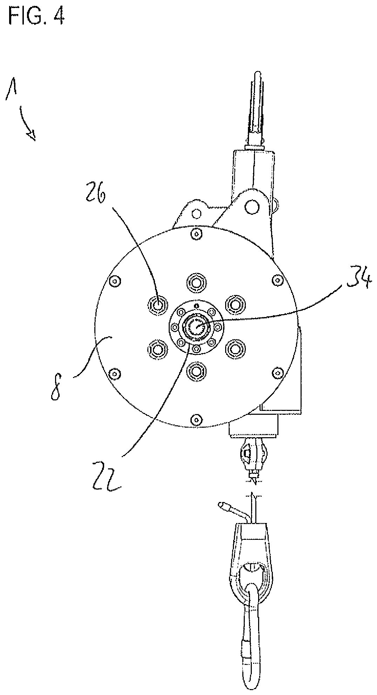

In Fig. 4 ist der Gewichtsausgleicher 1 aus Fig. 1 in einer Rückansicht gezeigt. Dabei sind insbesondere der Federträger 8, die Bolzen 26 sowie die Federlagerung 22 gut erkenntlich. Auch ist die gleichmäßige Verteilung der Bolzen 26 und damit der Druckfedern 30 im Umfang der Spindel 34 ersichtlich.

## Patentansprüche

1. Gewichtsausgleicher (1), insbesondere ein Federzug oder ein Balancer, für ein bewegliches Bauteil mit einem Bauteilgewicht, aufweisend
- ein Spindelgetriebe (32) mit einem Translationselement (36) und einem Rotationselement (34), an dem das Bauteil eingehängt werden kann, und
- wenigstens eine Druckfeder (30), die an einem ihrer Enden (29) mit dem Translationselement (36) des Spindelgetriebes verbunden ist, wobei
die Druckfeder bei einer durch das Bauteilgewicht verursachten Drehung des Rotationselements mittels des Translationselements stauchbar ist, **dadurch gekennzeichnet, dass**
die Druckfeder eine zylindrische Schraubenfeder ist, die entlang ihrer Längsachse bei Druckbelastung einfedern kann.

2. Gewichtsausgleicher nach Anspruch 1, wobei die Spindel ein Bewegungsgewinde (38), insbesondere ein Kugel- oder ein Rollengewinde, aufweist.

3. Gewichtsausgleicher nach Anspruch 1 oder 2, wobei das Rotationselement (34) eine Spindel und das Translationselement (36) eine Spindelmutter aufweist.

4. Gewichtsausgleicher nach einem der vorhergehenden Ansprüche, wobei die Druckfeder und das Translationselement mittels eines Anlageelements (44) verbunden sind, das an dem einen Ende (29) der Druckfeder anliegt und fest mit dem Translationselement verbunden ist.

5. Gewichtsausgleicher nach einem der vorhergehenden Ansprüche, wobei eine Längsbewegungsachse des Translationselements parallel zur Längsachse der Druckfeder verläuft.

6. Gewichtsausgleicher nach einem der vorhergehenden Ansprüche, aufweisend einen Federträger (8), an welchem die Druckfeder an dem anderen ihrer Enden (31) drehfest angeordnet ist und an welchem das Rotationselement drehbar gelagert ist.

7. Gewichtsausgleicher nach einem der vorhergehenden Ansprüche, wobei die Druckfeder koaxial mit dem Spindelgetriebe und radial außerhalb des Umfangs der Spindel angeordnet ist.

8. Gewichtsausgleicher nach einem der Ansprüche 1 bis 6, aufweisend mehr als eine, insbesondere 3, 4, 6 oder 8, Druckfedern aufweist, die parallel zueinander und gleichmäßig beabstandet im Umfang des Spindelgetriebes angeordnet sind.

9. Gewichtsausgleicher nach Anspruch 8, wobei jede der Druckfedern um einen Bolzen (26) angeordnet ist, der fest mit dem Federträger verbunden ist.

10. Gewichtsausgleicher nach Anspruch 9, wobei das Translationselement direkt oder mittelbar mittels des Anlageelements drehfest, aber frei in Stauchrichtung, mit wenigstens einem der Bolzen verbunden ist.

11. Gewichtsausgleicher nach einem der vorhergehenden Ansprüche, wobei das Rotationselement drehfest mit einer, insbesondere zylindrischen oder konischen, Seiltrommel (40) verbunden ist, an deren Umfang eine, insbesondere spiralförmige, Seilaufnahme (42) angeordnet ist.

12. Gewichtsausgleicher nach einem der vorhergehenden Ansprüche, wobei das Rotationselement mittels einer Einstelleinrichtung (10) vorübergehend von der Seiltrommel bzgl. Drehung entkoppelbar und im Verhältnis zum Translationselement drehbar ist.

## Claims

1. Balancer (1), in particular a spring balancer or a zero-gravity balancer, for a movable component with a component weight, having
- a spindle mechanism (32) with a translation element (36) and a rotation element (34), on which the component can be suspended, and
- at least one compression spring (30) which is connected, at one of its ends (29), to the translation element (36) of the spindle mechanism, wherein
the compression spring is able to be compressed by means of the translation element in the event of a rotation of the rotation element brought about by the component weight, **characterized in that**
the compression spring is a cylindrical coil spring which can deflect along its longitudinal axis in the event of compressive load.

2. Balancer according to Claim 1, wherein the spindle has a movement thread (38), in particular a ball screw or a roller screw.

3. Balancer according to Claim 1 or 2, wherein the rotation element (34) has a spindle and the translation element (36) has a spindle nut.

4. Balancer according to one of the preceding claims, wherein the compression spring and the translation element are connected by means of an abutment element (44) which butts against one end (29) of the compression spring and is firmly connected to the translation element.

5. Balancer according to one of the preceding claims, wherein a longitudinal axis of movement of the translation element extends parallel to the longitudinal axis of the compression spring.

6. Balancer according to one of the preceding claims, having a spring carrier (8) on which the compression spring is arranged in a rotationally fixed manner at the other of its ends (31) and on which the rotation element is mounted in a rotatable manner.

7. Balancer according to one of the preceding claims, wherein the compression spring is arranged coaxially with the spindle mechanism and radially outside the circumference of the spindle.

8. Balancer according to one of Claims 1 to 6, having has more than one, in particular 3, 4, 6 or 8, compression springs which are arranged parallel to one another and in an equally spaced manner in the circumference of the spindle mechanism.

9. Balancer according to Claim 8, wherein each of the compression springs is arranged around a bolt (26) which is firmly connected to the spring carrier.

10. Balancer according to Claim 9, wherein the translation element is connected to at least one of the bolts directly or indirectly by means of the abutment element in a rotationally fixed manner, but so as to be free in the compression direction.

11. Balancer according to one of the preceding claims, wherein the rotation element is connected in a rotationally fixed manner to an, in particular cylindrical or conical, cable drum (40) at the circumference of which an, in particular spiral-shaped, cable receptacle (42) is arranged.

12. Balancer according to one of the preceding claims, wherein the rotation element is able to be temporarily decoupled in terms of rotation from the cable drum by means of a setting device (10) and is rotatable with respect to the translation element.

## Revendications

1. Compensateur de poids (1), en particulier équilibreur à ressort ou équilibreuse, pour un composant mobile présentant un poids de composant, présentant
- une transmission à broche (32) avec un élément de translation (36) et un élément de rotation (34), auquel le composant peut être suspendu, et
- au moins un ressort de pression (30), qui est relié par une de ses extrémités (29) à l'élément de translation (36) de la transmission à broche,
dans lequel le ressort de pression peut être comprimé au moyen de l'élément de translation lors d'une rotation de l'élément de rotation causée par le poids du composant,
**caractérisé en ce que** le ressort de pression est un ressort hélicoïdal cylindrique, qui peut s'écraser le long de son axe longitudinal sous une charge de compression.

2. Compensateur de poids selon la revendication 1, dans lequel la broche présente un filetage de mouvement (38), en particulier un filetage à billes ou un filetage à rouleaux.

3. Compensateur de poids selon une revendication 1 ou 2, dans lequel l'élément de rotation (34) présente une broche et l'élément de translation (36) présente un écrou de broche.

4. Compensateur de poids selon l'une quelconque des revendications précédentes, dans lequel le ressort de pression et l'élément de translation sont reliés par un élément d'appui (44), qui s'applique sur une première extrémité (29) du ressort de pression et qui est attaché de façon fixe à l'élément de translation.

5. Compensateur de poids selon l'une quelconque des revendications précédentes, dans lequel un axe de mouvement longitudinal de l'élément de translation s'étend parallèlement à l'axe longitudinal du ressort de pression.

6. Compensateur de poids selon l'une quelconque des revendications précédentes, présentant un support de ressort (8), sur lequel le ressort de pression est disposé de façon calée en rotation par l'autre de ses extrémités (31) et sur lequel l'élément de rotation est monté de façon rotative.

7. Compensateur de poids selon l'une quelconque des revendications précédentes, dans lequel le ressort de pression est disposé de façon coaxiale à la transmission à broche et radialement à l'extérieur de la périphérie de la broche.

8. Compensateur de poids selon l'une quelconque des revendications 1 à 6, présentant plus qu'un, en particulier 3, 4, 6 ou 8, ressorts de pression, qui sont disposés parallèlement les uns aux autres et sont espacés uniformément à la périphérie de la transmission à broche.

9. Compensateur de poids selon la revendication 8, dans lequel chacun des ressorts de pression est disposé autour d'un boulon (26) qui est assemblé de façon fixe au support de ressort.

10. Compensateur de poids selon la revendication 9, dans lequel l'élément de translation est relié à au moins un des boulons, directement ou indirectement au moyen de l'élément d'appui, de façon calée en rotation, mais libre dans la direction d'écrasement.

11. Compensateur de poids selon l'une quelconque des revendications précédentes, dans lequel l'élément de rotation est assemblé de façon calée en rotation à un tambour à câble (40), en particulier cylindrique ou conique, dont la périphérie est dotée d'un logement de câble (42), en particulier en forme de spirale.

12. Compensateur de poids selon l'une quelconque des revendications précédentes, dans lequel l'élément de rotation peut être provisoirement découplé du tambour à câble au niveau de la rotation au moyen d'un dispositif de réglage (10) et peut tourner en rapport avec l'élément de translation.
